# EUROPÄISCHE PATENTSCHRIFT

(11) **EP 2 195 571 B1**
(45) Veröffentlichungstag und Bekanntmachung des Hinweises auf die Patenterteilung: **18.01.2012**
(21) Anmeldenummer: 08837757.7
(22) Anmeldetag: 30.09.2008
(51) Int. Cl.: F16P 3/08, B67C 7/00

(54) **FLASCHENBEHANDLUNGSANLAGE MIT SICHERHEITSEINRICHTUNG**
BOTTLE TREATMENT SYSTEM HAVING SAFETY UNIT
INSTALLATION DE TRAITEMENT DE BOUTEILLES AVEC DISPOSITIF DE SECURITE

(30) Priorität: 05.10.2007 DE 102007047733
(43) Veröffentlichungstag der Anmeldung: 16.06.2010
(73) Patentinhaber: Krones AG, 93073 Neutraubling (DE)
(72) Erfinder: ZECH, Thomas, 93093 Donaustauf (DE)
(74) Vertreter: Grünecker, Kinkeldey, Stockmair & Schwanhäusser
(86) Internationale Anmeldenummer: PCT/EP2008/008301
(87) Internationale Veröffentlichungsnummer: WO 2009/046910

(56) Entgegenhaltungen:
- DE-A1- 3 823 032
- DE-A1- 19 928 325
- DE-A1-102005 041 531
- GB-A- 1 597 918
- GB-A- 2 261 045
- US-B1- 6 325 195

## Beschreibung

Die vorliegende Erfindung betrifft eine Flaschenbehandlungsanlage mit Sicherheitseinrichtung umfassend einen ersten zugänglichen Schutzbereich und einen zweiten zugänglichen Schutzbereich, welcher unmittelbar an den ersten Schutzbereich angrenzt. Der erste Schutzbereich ist durch einen ersten Schutz begrenzt und ist vorgesehen, eine erste Maschine mit wenigstens einen, dem ersten Schutzbereich zugeordneten Antrieb aufzunehmen. Der zweite Schutzbereich ist durch einen an den ersten Schutz unmittelbar angrenzenden zweiten Schutz begrenzt und ist vorgesehen, eine zweite Maschine mit wenigstens einen, dem zweiten Schutzbereich zugeordneten weiteren Antrieb aufzunehmen. Über die erste und zweite Maschine wird ein Flaschentransport durchgeführt, wobei der Flaschentransport von der ersten zu der zweiten Maschine über eine schutzbereichsüberschreitende, mit einem eigenen Antrieb vorgesehene Transporteinrichtung erfolgt.

Ein Aufbau solch einer Flaschenbehandlungsanlage basiert im Allgemeinen auf einem flexiblen Anlagenkonzept, wobei die Flexibilität durch eine Modularität von Systemkomponenten erreicht wird. Unter einer Systemkomponente ist hierbei ein Anlagenteil, wie beispielsweise eine Anlage zur Entkeimung, eine Anlage zum Abfüllen und eine Anlage zum Verschließen von Flaschen zu verstehen. Eine Kombination von wenigstens zwei Anlagenteilen stellt eine Flaschenbehandlungsanlage im Sinne der vorliegenden Erfindung dar. Die einzelnen Anlagenteile umfassen üblicherweise eine für den entsprechenden Produktionsablauf vorgesehene Maschine, die von einer Einhausung umgeben, welche einen Schutz vor Eingriff durch Personal in den Maschinenbereich gewährleistet. Die Einhausung kann auch derart ausgelegt sein, dass die Maschine zusätzlich vor äußeren Einflüsse wie Feuchtigkeit, Staub oder dergleichen geschützt wird. Dadurch kann eine Sterilität innerhalb des Anlagenteils sichergestellt werden.

Aus der gattungsbildenden DE 199 28 325 ist solch eine Flaschenbehandlungsanlage bekannt. Die Flaschenbehandlungsanlage setzt sich aus drei nacheinander angeordneten Maschinen zusammen, das sind eine Streckblasmaschine mit vorgeschalteter Vorformling-Zuführung, eine Spülmaschine in Form eines Rinsers sowie eine Füllmaschine mit integrierter Verschließstation. Jeder dieser Maschinen ist durch eine Einhausung geschützt, wodurch ein Schutzbereich für jede dieser Maschinen definiert ist. Die Maschine ist als Rundläufer, insbesondere als Drehstern ausgebildet, wobei benachbarte Maschinen zweier angrenzender Schutzbereiche über eine schutzbereichsüberschreitende Transporteinrichtung verbunden sind, um einen Flaschentransportweg von der einen Maschine zu der anderen Maschine sicherzustellen. Die Maschinen verfügen jeweils über einen eigenen Antrieb. Die Transporteinrichtung kann hierbei entweder an den von dem Antrieb zu der Maschine führenden Antriebsstrang angeschlossen werden, um auf einfache Weise einen Synchronlauf zwischen Maschine und Transporteinrichtung zu erreichen, oder sie weist einen eigenen Antrieb auf.

Eine aus GB 1 597 918 A bekannte Flaschenbehandlungsmaschine weist einen einzigen Schutzbereich um die aus Füller und zugeordnetem Verschließer bestehende Maschine auf, wobei in den Schutzbereich ein Zuführer einläuft und aus dem Schutzbereich ein Abführer ausläuft. Der Schutzbereich enthält mehrere Zutrittspaneele, von denen zumindest zwei durch eine Abschaltvorrichtung in Form von Mikroschaltern überwacht sind. Bei Öffnen eines dieser Zutrittspaneele wird die gesamte Maschine abgeschaltet, d.h., es werden zumindest die Antriebe des Füllers, der Verschließers und der Transfersterne innerhalb des Schutzbereiches stillgesetzt.

Weiterer Stand der Technik ist enthalten in DE 38 23 032 A, DE 10 2005 041 531 A, GB 2 261 045 A und US 6 325 195 B1.

Aus der DE 24 36 591 ist eine weitere Flaschenbehandlungsanlage bekannt, die eine Füll- und Verschließmaschine und eine nachgeschaltete Etikettiermaschine aufweist. Zwischen diesen Maschinen ist ebenfalls eine Transporteinrichtung zur Übergabe der Flaschen angeordnet. Die in einem ersten Schutzbereich vorgesehene Füll- und Verschließmaschine wird über einen Hauptmotor angetrieben, wobei der Hauptmotor parallel über einen Hauptantriebsstrang die Etikettiermaschine in dem angrenzenden zweiten Schutzbereich mit antreibt. In dem zweiten Schutzbereich ist zusätzlich ein Hilfsmotor für einen Antrieb der Etikettiermaschine vorgesehen, um die Etikettiermaschine unabhängig von der Füll- und Verschließmaschine hilfsweise antreiben zu können. Dazu umfasst der Hauptantriebsstrang eine Schaltkupplung, welche die Etikettiermaschine von dem Hauptantrieb der Füll- und Verschließmaschine trennt. An dem Hauptantriebsstrang ist ferner die Transporteinrichtung angeschlossen, so dass die Transporteinrichtung ebenfalls über den Hauptantrieb angetrieben wird. Dabei umfasst die Transporteinrichtung zwei als Rundläufer ausgebildete Transportelemente, wobei das erste Transportelement auf der Seite der Füll- und Verschließmaschine und das zweite Transportelement auf der Seite der Etikettiermaschine mit dem Antriebsstrang verbunden ist. Eine antriebsmäßige Trennung der beiden Maschinen über die Schaltkupplung bewirkt gleichfalls eine antriebsmäßige Trennung der Transportelemente.

Eine andere Flaschenbehandlungsanlage wird in der DE 25 07 419 offenbart. Auch bei dieser Flaschenbehandlungsanlage wird ein unabhängiger Antrieb der Füll- und Verschließmaschine sowie der Etikettiermaschine über einen in dem Schutzbereich der Etikettiermaschine angeordneten Hilfsmotor und einer Trenn- und Schaltkupplung realisiert. Die Trenn- oder Schaltkupplung wird zeitverzögert dann betätigt, wenn eine in der Flaschenbehandlungsanlage vorgesehene Überwachungsvorrichtung einen geschlossenen Zustand einer Flaschensperre meldet, die ein weiteres Zuführen von Flaschen zu der Füll- und Verschließanlage verhindert, so dass die Füll- und Verschließmaschine sowie die Etikettiermaschine leerlaufen können. Die Flaschenbehandlungsanlage umfasst weiterhin eine in dem Übergangsbereich der durch die Füll- und Verschließmaschine sowie der Etikettiermaschine definierenden Schutzbereiche angeordnete Transporteinrichtung mit zwei Transportelementen, die über den Hauptantrieb der Füll- und der Verschließmaschine mit angetrieben wird. Das erste Transportelement ist antriebsseitig mit der Füll- und Verschließmaschine verbunden, während das zweite Transportelement auf der Antriebsseite der Etikettiermaschine angeschlossen ist.

Mit der DE 25 06 409 wird eine weitere Flaschenbehandlungsanlage offenbart, welche sich von den vorgenannten nur dadurch unterscheidet, dass zwischen den beiden Transportelementen der Transporteinrichtung eine Förderschnecke zur Übergabe der Flaschen von dem ersten Transportelement an das zweite Transportelement zwischengeschaltet ist. Auch hier wird die Transporteinrichtung, wie die vorbeschriebenen Transporteinrichtungen, über den in dem Schutzbereich der Füll- und Verschließmaschine vorgesehenen Hauptantrieb angetrieben.

Zum Reinigen und Warten der Maschinen der Flaschenbehandlungsanlagen sind die Schutzbereiche generell zugänglich ausgebildet. Um allerdings solche Arbeiten direkt an den Maschinen bzw. der Transporteinrichtungen durchführen zu können, sind aus Gründen der Sicherheit und zum Schutz des Personals die Antriebe der Maschinen abzuschalten, um einem Verletzungsrisiko des Personals vorzubeugen. So werden bei Zugang zu dem Schutzbereich die dem Schutzbereich zugeordneten Antriebe durch die Zugänge überwachende Schalter zwangsweise abgeschaltet. Hierbei ergibt sich insbesondere im Übergangsbereich angrenzender Schutzbereiche, in welchem üblicherweise die Transporteinrichtung zur Übergabe der Flaschen von der einen zu der nächsten Maschine vorgesehen ist, das Problem, dass das Personal vor einem Betrieb der Transporteinrichtung zu schützen ist, wenn beispielsweise parallelablaufende Wartungs- und Reinigungsvorgänge unabhängig voneinander an den in den angrenzenden Schutzbereichen angeordneten Maschinen vorgenommen werden müssen. Hierbei kommt es zur Minimierung von Umrüstungs-, Wartungs- und Fehlerbeseitigungszeiten dazu, dass eine Maschine beispielsweise zu Probe- oder Testläufen betrieben werden muss, d.h. die angetriebenen Teile dieser Maschine drehen, während die angetriebenen Teile der anderen Maschine stillstehen, um direkt an den Maschinenkomponenten dieser Maschine erforderliche Tätigkeiten ausführen zu können. So wird beispielsweise die Maschine in dem ersten Schutzbereich zu Reinigungszwecken gedreht, während an der Maschine in dem angrenzenden Schutzbereich Verschleißteile auszuwechseln sind. Dabei muss das an der Maschine in dem zweiten Schutzbereich arbeitende Personal insbesondere gegenüber einem Betrieb der schutzbereichüberschreitenden Transporteinrichtung geschützt werden. Dies wird im allgemeinen dadurch erreicht, dass ein mechanischer Schutz um die Transporteinrichtung eingerichtet wird. Diese Maßnahme ist jedoch sehr zeitaufwendig, führt zu zeitlichen Verzögerungen während des Reinigungs- bzw. Wartungsvorganges und ist durch die Bereitstellung des mechanischen Schutzes zudem sehr kostenintensiv.

Der vorliegenden Erfindung liegt daher das Problem zugrunde, eine Flaschenbehandlungsanlage mit einer Sicherheitseinrichtung anzugeben, welche einen Betriebsablauf, beispielsweise von Wartungs- und Reinigungsvorgängen, unter Beachtung von Sicherheitsaspekten verbessert. Wenn die eine Maschine in ihrem Schutzbereich betrieben werden muss, während Personen an der anderen Maschine in deren Schutzbereich Tätigkeiten ausführen.

Zur Lösung des obigen Problems wird mit der vorliegenden Erfindung eine Flaschenbehandlungsanlage mit Sicherheitseinrichtung mit den Merkmalen von Anspruch 1 angegeben. Die Flaschenbehandlungsanlage weist eine Sicherheitseinrichtung auf, welche einen ersten zugänglichen Schutzbereich umfasst, der durch einen ersten Schutz begrenzt ist und in welchem eine erste Maschine mit wenigstens einem dem ersten Schutzbereich zugeordneten Antrieb vorgesehen ist. Die Sicherheitseinrichtung der Flaschenbehandlungsanlage umfasst ferner einen zweiten zugänglichen Schutzbereich, der durch einen an den ersten Schutz unmittelbar angrenzenden zweiten Schutz begrenzt ist und in welchem eine zweite Maschine mit wenigstens einem dem zweiten Schutzbereich zugeordneten weiteren Antrieb vorgesehen ist. Ein Flaschentransport von der ersten zu der zweiten Maschine wird über eine schutzbereichsüberschreitende, mit einem eigenen Antrieb vorgesehene Transporteinrichtung durchgeführt. Die Sicherheitseinrichtung weist weiterhin eine Abschaltvorrichtung auf, welche bei Zugang zu irgendeinem der Schutzbereiche den wenigstens einen, dem jeweiligen Schutzbereich zugeordneten Maschinenantrieb und den Antrieb der Transporteinrichtung abschaltet. Dadurch wird auf einfache Weise sichergestellt, dass das Wartungs- und Reinigungspersonal bei direkt an einer der Maschinen durchzuführenden Tätigkeiten vor einem Betrieb der Transporteinrichtung geschützt ist, wenn beispielsweise die in einem angrenzenden Schutzbereich angeordnete Maschine zu Reinigungszwecken betrieben werden muss. Der üblicherweise vorgesehene mechanische Schutz für die Transporteinrichtung kann daher bei der Flaschenbehandlungsanlage nach der vorliegenden Erfindung entfallen, wodurch Kosten eingespart werden. Weiterhin sind schnellere Umrüstzeiten sowie kürzere Stillstandszeiten im Fehlerfall erreichbar, wodurch ein Betriebsablauf der Flaschenbehandlungsanlage im allgemeinen wesentlich verbessert wird. Die in den Schutzbereichen vorgesehenen Maschinen umfassen mehrere Maschinenteile mit jeweils eigenem Antrieb. Ferner ist zu jedem Maschinenteil ein korrespondierender Einlass vorgesehen, wodurch auf einfache Art und Weise ein Zugriff zu den einzelnen Maschinenteilen erleichtert wird. Abhängig von der Größe der Maschinenteile oder der Größe des Einlasses, ist der Einlass auch für wenigstens zwei Maschinenteile ausbildbar. Hierbei umfassen der erste und zweite Schutz jeweils wenigstens einen Einlass, wobei die Abschaltvorrichtung derart ausgebildet ist, dass die vorgenommene Antriebsabschaltung durch Öffnen des Einlasses erfolgt. Unter einem Einlass ist im Sinne der vorliegenden Erfindung jegliche Zugangs- oder Zugriffsmöglichkeit zu dem entsprechenden Schutzbereich zu verstehen. Im Einzelnen kann der Einlass hierbei eine Schutztür, Schutzklappe, Schutzfenster oder dergleichen sein. An dem Einlass kann beispielsweise ein der Abschaltvorrichtung zugeordnetes Sensorelement oder Schaltelement vorgesehen werden, welches das Öffnen des Einlasses registriert und ein Abschaltsignal übermittelt. Dadurch wird auf zuverlässige Weise sichergestellt, dass das Bedienerpersonal bei etwaigen Arbeiten an der Maschine keiner Verletzungsgefahr durch einen Betrieb der Transporteinrichtung ausgesetzt wird, da bereits bei Öffnen des Einlasses, weit vor Zutritt in den Schutzbereich, die Abschaltung der Antriebe veranlasst wird.

Vorzugsweise ist die Abschaltvorrichtung dabei derart ausgebildet, dass bei Öffnen des Einlasses nur der zu dem Einlass korrespondierende und direkt daran angrenzende Antrieb des entsprechenden Maschinenteils durch die Abschaltvorrichtung abgeschaltet wird. Dadurch werden nicht zwangsläufig alle Maschinenteile der Maschine in dem Schutzbereich abgeschaltet, wenn ein in dem Schutz vorhandener Einlass geöffnet wird. Dieses ist insbesondere dann vorteilhaft, wenn lediglich ein Maschinenteil der Maschine eine Beschädigung aufweist, welche durch eine einfache Maßnahme zügig behebbar ist. Dadurch muss nicht zwangsläufig der gesamte Betriebsablauf der Maschine unterbrochen werden. Ferner können auch so an einer Maschine mit mehreren Maschinenteilen gleichzeitig verschiedenartige-Inspektions- und Wartungsarbeiten durchgeführt werden, wobei beispielsweise ein Maschinenteil betrieben werden muss, während ein anderes Maschinenteil in einem betriebslosen Zustand zu warten ist. Dadurch, dass die direkt angrenzenden Maschinenteile des zu dem geöffneten Einlass korrespondieren Maschinenteils ebenfalls abgeschaltet werden, ist eine parallele Maßnahme an mehreren Maschinenteilen einer Maschine möglich, wodurch Stillstandzeiten der Flaschenbehandlungsanlage weiter reduziert werden können.

Gemäß einer weiteren bevorzugten Ausgestaltung der vorliegenden Erfindung ist die Abschaltvorrichtung derart ausgebildet, dass eine Antriebsversorgung zu den Antrieben der Maschinen, der Maschinenteile und der Transporteinrichtung unterbrochen werden kann. Die Unterbrechung der Antriebsversorgung sorgt in zuverlässiger Weise dafür, dass ein Betrieb der Maschine, des Maschinenteils oder der Transporteinrichtung bei etwaiger Fehlfunktion des Antriebes, wie beispielsweise ein unvorhergesehenes Anschalten des Antriebes, unterbleibt und so eine Verletzungsgefahr des Personals weiter reduziert ist.

Vorzugsweise sind in einer weiteren Ausgestaltung der vorliegenden Erfindung sämtliche in der Flaschenbehandlungsanlage vorgesehene Antriebe als Servo-Antriebe ausgelegt. Servo-Antriebe gehören zu den elektromagnetische Antriebssystem, die im Vergleich zu hydraulischen bzw. mechanischen Antrieben nur dann eine Antriebsversorgung benötigen, wenn sie betrieben werden. Sofern die Antriebsversorgung, d.h. der Strom, zu dem Servo-Antrieb unterbrochen wird, kann der Servo-Antrieb von alleine, beispielsweise durch eine etwaige Fehlfunktion, nicht angeschaltet werden. Eine Verletzungsgefahr des Bedienerpersonals durch einen unvorhersehbaren Betrieb der Transporteinrichtung oder der Maschinenteile kann dadurch nahezu ausgeschlossen werden.

In einer weiteren bevorzugten Ausgestaltung der vorliegenden Erfindung weist die Flaschenbehandlungsanlage mit Sicherheitseinrichtung wenigstens ein durch einen weiteren Schutz begrenzten, unmittelbar an den ersten oder zweiten Schutzbereich angrenzenden weiteren Schutzbereich auf, wobei in dem Schutzbereich eine weitere Maschine und eine weitere schutzbereichsüberschreitende Transporteinrichtung mit jeweils eigenem Antrieb angeordnet sind. Ein Flaschentransport von der einen zu der weiteren Maschine des weiteren Schutzbereiches wird über die weitere Transporteinrichtung sichergestellt. Diese bevorzugte Ausgestaltung ermöglicht im Bedarfsfall einen weiteren modularen Aufbau der Flaschenbehandlungsanlage mit weiteren Maschinen unter Berücksichtigung und Einhaltung der notwendigen Sicherheitsvorkehrungen. Wenn beispielsweise die in dem mittleren Schutzbereich angeordnete Maschine gereinigt und dabei gedreht werden soll, wohingegen die an den mittleren Schutzbereich angrenzenden Maschinen durch Austausch mit Versorgungsteilen instand gesetzt werden, werden durch die erfindungsgemäße Abschaltvorrichtung die Antriebe der diesen Schutzbereichen zugeordneten Maschinen bzw. Maschinenteilen sowie die Antriebe der den mittleren Schutzbereich überschreitenden Transporteinrichtungen abgeschaltet. Dadurch kann vorteilhafterweise an allen Systemkomponenten der Flaschenbehandlungsanlage parallel Instandsetzungs- und Wartungsmaßnahmen durchgeführt werden. Dadurch wird ein Betriebsablauf einer Flaschenbehandlungsanlage mit mehr als zwei Schutzbereichen weiter verbessert.

Weitere bevorzugte Ausgestaltungen der vorliegenden Erfindung sind mit den Unteransprüchen angegeben.

Weitere Einzelheiten, Vorteile und Merkmale der vorliegenden Erfindung ergeben sich aus der nachfolgenden Beschreibung eines Ausführungsbeispiels in Verbindung mit der Zeichnung. In dieser Zeichnung zeigt:

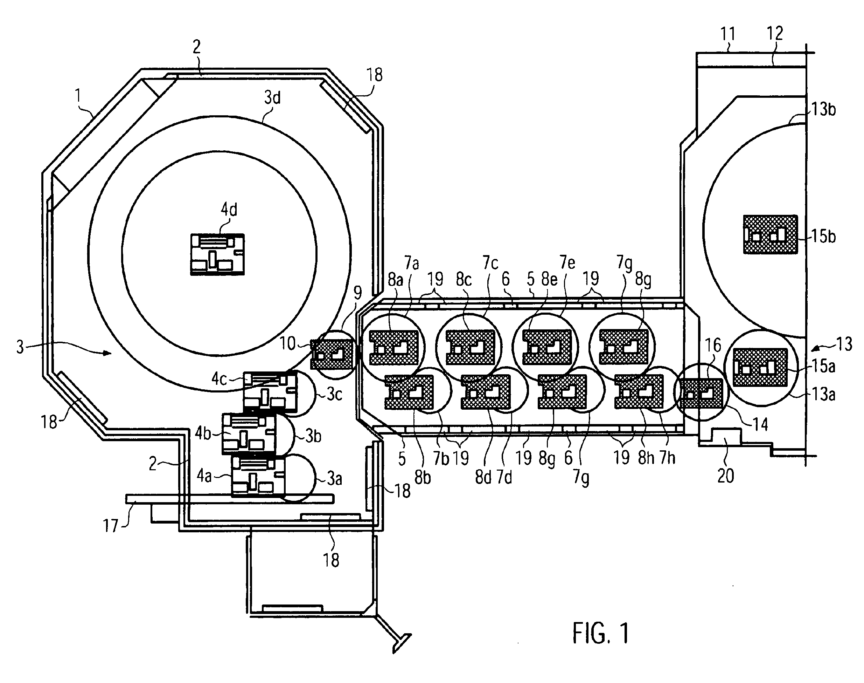

- Fig. 1: eine schematische Darstellung eines Ausführungsbeispiels einer Flaschenbehandlungsanlage mit Sicherheitseinrichtung nach der vorliegenden Erfindung.

Die Fig. 1 zeigt eine schematische Darstellung eines Ausführungsbeispiels einer Flaschenbehandlungsanlage mit Sicherheitseinrichtung nach der vorliegenden Erfindung. Die Flaschenbehandlungsanlage umfasst einen ersten Schutzbereich 1, einen zweiten Schutzbereich 5 und einen dritten Schutzbereich 11. Die Schutzbereiche 1, 5 und 11 sind so angeordnet, dass der erste Schutzbereich 1 direkt an den zweiten Schutzbereich 5 und der zweite Schutzbereich 5 direkt an den dritten Schutzbereich 11 angrenzt. Die einzelnen Schutzbereiche 1, 5 und 11 umfassen jeweils einen Schutz 2, 6 und 12. Der dritte Schutzbereich 11 mit seinem dritten Schutz 12 ist hierbei der Einfachheit halber nur zur Hälfte dargestellt. An den dritten Schutzbereich 11 können weitere Schutzbereiche angrenzen. In dem ersten Schutzbereich 1 ist eine Maschine 3 mit vier als Rundläufer ausgebildeten Maschinenteilen 3a, 3b, 3c, 3d vorgesehen. Jeder der Maschinenteile 3a, 3b, 3c und 3d weist einen eigenen Antrieb 4a, 4b, 4c und 4d auf, die die Maschinenteile 3a, 3b, 3c und 3d so antreiben, dass direkt benachbarte Maschinenteile 3a, 3b; 3c, 3d gegenläufig zueinander rotieren. Dem ersten Schutzbereich 1 ist ferner eine Flaschenzuführung 17 zugeordnet, welche die Flaschen von außen in den ersten Schutzbereich 1 zu dem ersten Maschinenteil 3a der Maschine 3 zuführt. Das erste Maschinenteil 3a nimmt die Flaschen der Flaschenzuführung 17 auf und gibt diese per Rotation an das zweite Maschinenteil 3b weiter. Der Flaschentransport von dem zweiten Maschinenteil 3b über den dritten Maschinenteil 3c zu dem vierten Maschinenteil 3d erfolgt gleichermaßen. Dadurch kann der Flaschentransportweg von dem ersten Maschinenteil 3a zu dem vierten Maschinenteil 3d auf kürzestem Wege erfolgen.

In dem ersten Schutzbereich 1 ist weiterhin eine schutzbereichsüberschreitende Transporteinrichtung 9 mit eigenem Antrieb 10 vorgesehen. Die schutzbereichsüberschreitende Transporteinrichtung 9 läuft ebenfalls gegenläufig zu dem vierten Maschinenteil 3d, nimmt die durch den vierten Maschinenteil 3d transportierte Flasche auf und gibt diese an ein erstes Maschinenteil 7a der zweiten Maschine 7 in dem direkt an den ersten Schutzbereich 1 angrenzenden zweiten Schutzbereich 5 weiter.

Die dem ersten Schutzbereich 1 zugeodnete erste Maschine 3 ist beispielsweise eine Entkeimungsanlage, in welcher die Flaschen entkeimt werden. Die dem zweiten Schutzbereich 5 zugeordnte zweite Maschine 7 ist beispielsweise eine Abfüllanlage, in welcher ein sterilisiertes Produkt in die entkeimten Flaschen gefüllt wird. Der zweite Schutzbereich 5 ist dabei von einem zweiten Schutz 6 umgeben, welcher die zweite Maschine 7 mit zweiten Maschinenteilen 7a bis 7h aufweist, wobei jeder dieser Maschinenteile 7a bis 7h über einen eigenen Antrieb 8a bis 8h verfügt. Die einzelnen Maschinenteile 7a bis 7h der zweiten Maschine 7 sind ebenfalls als Rundläufer ausgebildet und rotieren entsprechend wie die einzelnen Maschinenteile 3a bid 3d der ersten Maschine 3 gegenläufig zueinander.

Die in dem dritten Schutzbereich 11 angeordnete dritte Maschine 13 ist beispielsweise als Verschließanlage ausgebildet. In der Verschließanlage werden in einem Desinfektionsbad die Verschlüsse entkeimt und anschließend in dem aseptischen Verschließer auf die von der Abfüllanlage zugeführten Flaschen aufgebracht. Der dritte Schutzbereich 11 umfasst dabei einen dritten Schutz 12, der direkt an den zweiten Schutz 6 des zweiten Schutzbereichs 5 angrenzt. Die Flaschen aus dem zweiten Schutzbereich 5 werden über eine Transporteinrichtung 14 mit eigenem Antrieb 16 an ein Maschinenteil 13a der dritten Maschine 13 übergeben. Die Transporteinrichtung 14 ist ebenfalls als Rundläufer ausgebildet und rotiert gegenläufig zu dem letzten Maschinenteil 7h der zweiten Maschine 7 in dem zweiten Schutzbereich 5 sowie dem ersten Maschinenteil 13a der dritten Maschine 13 in dem dritten Schutzbereich 11. Die über die Transporteinrichtung 14 transportierte Flasche wird über das erste Maschinenteil 13a an das zweite Maschinenteil 13b der Maschine 13 weitertransportiert. Auch hierbei sind die einzelnen Maschinenteile 13a und 13b als Rundläufer ausgebildet und drehen gegenläufig zueinander. Jeder dieser Maschinenteile 13a, 13b umfasst einen eigenen Antrieb 15a und 15b.

In dem ersten, zweiten und dritten Schutz 1, 2 und 3 sind jeweils mehrere erste, zweite und dritte Einlässe 18, 19 und 20 vorgesehen, die einen Zugang zu den entsprechenden Schutzbereichen 1, 5 und 11 sowie einen Zugriff auf die einzelnen Maschinenteile 3a bis 3d der ersten Maschine 3, der Maschinenteile 7a bis 7h der zweiten Maschine 7 und der Maschinenteile 13a und 13b der dritten Maschine 13 erlauben. Die Einlässe 18, 19 und 20 sind über nicht dargestellte Komponenten an die nicht gezeigte Abschaltvorrichtung der Flaschenbehandlungsanlage derart verbunden, dass bei Öffnen eines der Einlässe 18, 19 und 20 ein Abschaltsignal an die Abschaltvorrichtung weitergeben wird, so dass die Abschaltvorrichtung den Antrieb der dem geöffneten Einlass zuzuordnenden Maschine und den bzw. die Antriebe der an diese Maschine angrenzenden Transporteinrichtungen abschaltet. Die Kopplung zwischen den Einlässen 18, 19 und 20 und der Abschaltvorrichtung kann hierbei aber auch derart ausgelegt sein, dass nur der Antrieb des dem geöffneten Einlass zugeordneten Maschinenteils sowie die Antriebe dieser direkt angrenzenden Maschinenteile bzw. Transporteinrichtung abgeschaltet wird. Hierbei weist die Abschaltvorrichtung eine Einrichtung auf, mit der eine Abschaltung der Antriebe einzelner Maschinenteile und Transporteinrichtungen oder eine Abschaltung aller Antriebe einer Maschine sowie des Antriebes der angrenzenden Transporteinrichtung bei Öffnen eines oder mehrerer Einlässe wählbar ist.

## Patentansprüche

1. Flaschenbehandlungsanlage mit Sicherheitseinrichtung umfassend einen ersten zugänglichen Schutzbereich (1), welcher durch einen ersten Schutz (2) begrenzt ist und in welchem eine erste Maschine (3) mit wenigstens einem dem ersten Schutzbereich (1) zugeordneten Antrieb (4a-4c) vorgesehen ist; und einen zweiten zugänglichen Schutzbereich (5), welcher durch einen an den ersten Schutz (2) unmittelbar angrenzenden zweiten Schutz (6) begrenzt ist und in welchem eine zweite Maschine (7) mit wenigstens einem dem zweiten Schutzbereich (5) zugeordneten weiteren Antrieb (8a-8h) vorgesehen ist, wobei ein Flaschentransport von der ersten Maschine (3) zu der zweiten Maschine (7) über eine schutzbereichsüberschreitende, mit einem gegenüber den Antrieben (4a-4c; 8a-8h) eigenen Antrieb (10) versehene Transporteinrichtung (9) durchgeführt wird, **gekennzeichnet durch** eine Abschaltvorrichtung, welche bei Zugang zu irgendeinem der Schutzbereiche (1; 5) den wenigstens einen den jeweiligen Schutzbereich (1, 5) zugeordneten Maschinenantrieb (4a-4c; 8a-8h) und den eigenen Antrieb (10) der den Schutzbereich überschreitende Transporteinrichtung (9) abschaltet, dass die erste (3) und/oder zweite Maschine (7) jeweils mehrere Maschinenteile (3a-3c; 7a-7h) umfasst, für die jeweils ein eigener Antrieb (4a-4c; 8a-8h) vorgesehen ist, dass der erste (2) und/oder zweite Schutz (6) korrespondierend zu jedem Maschinenteil (3a-3c; 7a-7h) einen Einlass (18, 19) aufweist, und dass die Abschaltvorrichtung derart ausgebildet ist, dass die vorgenommene Antriebsabschaltung **durch** Öffnen eines jeden Einlasses (18, 19) erfolgt.

2. Flaschenbehandlungsanlage nach Anspruch 1, **dadurch gekennzeichnet, dass** die Abschaltvorrichtung derart ausgebildet ist, dass bei Öffnen des Einlasses (18; 19) nur der zu dem Einlass (18; 19) korrespondierende und direkt daran angrenzende Antrieb (4a-4c; 8a-8h; 10) des entsprechenden Maschinenteils (3a-3c; 7a-7h) durch die Abschaltvorrichtung abgeschaltet wird.

3. Flaschenbehandlungsanlage nach einem der vorherigen Ansprüche, **dadurch gekennzeichnet, dass** die Abschaltvorrichtung derart ausgebildet ist, dass eine Antriebsversorgung zu den Antrieben (4a-4c; 8a-8h, 10) der Maschinen (3, 7), der Maschinenteile (3a-3c; 7a-7h) und der Transporteinrichtung (9) unterbrochen werden kann.

4. Flaschenbehandlungsanlage nach einem der vorherigen Ansprüche, **dadurch gekennzeichnet, dass** die Antriebe (4a-4c; 8a-8h, 10) der Maschinen (3, 7), der Maschinenteile (3a-3c; 7a-7h) und der Transporteinrichtung (9) elektromagnetische Antriebe sind.

5. Flaschenbehandlungsanlage nach einem der vorherigen Ansprüche, **dadurch gekennzeichnet, dass** wenigstens ein durch einen weiteren Schutz (12) begrenzter, unmittelbar an den ersten (1) oder zweiten Schutzbereich (5) angrenzender weiterer Schutzbereich (11) vorgesehen ist, wobei in dem Schutzbereich (11) eine weitere Maschine (13; 13a, 13b) und eine weitere schutzbereichsüberschreitende Transporteinrichtung (14) mit jeweils eigenem Antrieb (15a; 15b; 16) angeordnet sind, wobei die weitere Transporteinrichtung (14) den Flaschentransport von der einen (7; 7h) zu der weiteren Maschine (13; 13b) sicherstellt.

## Claims

1. Bottle treatment system having a safety unit comprising a first accessible protected range (1) which is bound by a first protection means (2) and within which a first machine (3) is arranged including a drive for (4a-4c) associated to the first protected range (1); and a second accessible protected range (5) bound by a second protection means (6) directly adjacent to the first protection means (2) and within which a second machine (7) is arranged including at least one further drive (8a-8h) associated to the second protected range (5), wherein bottle transport is carried out from the first machine (3) to the second machine (3) by a transport assembly (9) having its own drive (19) in relation to the drives (41-4c; 8a-8h) and traversing the protected ranges, **characterised by** a switch-off device for switching off the at least one machine drive (4a-4c; 8a-8h) and the own drive (19) of the transport assembly (9) which traverses the respective protected range in case of an access occurring to any of the protected ranges (1; 5), that the first and/or second machine (3, 7) respectively comprises several machine parts (3a-3c; 7a-7h) having a respective own drive (4a-4c; 8a-8h), that the first and/or the second protection means (2, 6) comprises an inlet (18, 19) corresponding with each machine part (3a-3c; 7a-7h), and that the switch-off device is formed such that the respective drives are switched off upon opening of each of the inlets (18, 19).

2. Bottle treatment system according to claim 1, **characterised in that** the switch-off device is formed such that upon opening the inlet (18; 19) only the drive (4a-4c; 8a-8h, 10) of the corresponding machine part (3a-3c; 7a-7h) is switched off by the switch-off device which drive is situated directly adjacent to the inlet (18, 19).

3. Bottle treatment system according to one of the preceding claims, **characterised in that** the switch-off device is formed such that a drive supply means for the drives (4a-4c; 8a-8h, 10) of the machines (3, 7), of the machine parts (3a-3c; 7a-7h) and of the transport assembly (9) can be interrupted.

4. Bottle treatment system according to one of the preceding claims, **characterised in that** the drives (4a-4c; 8a-8h, 10) of the machines (3, 7) of the machine parts (3a-3c; 7a-7h) and of the transport assembly (9) are electromagnetic drives.

5. Bottle treatment system according to one of the preceding claims, **characterised in that** at least one further protected range is provided and is bound by a further protection means (12) directly adjacent to the first or second protected range (1, 5), with a further machine (13; 13a, 13b) and a further transport assembly (14) respectively having its own drive (15a; 15b; 16) being arranged in the further protected range (11) with the transport assembly (14) traversing protected ranges, the further transport assembly (14) assuring bottle transport from the one machine (7; 7h) to the further machine (13; 13b).

## Revendications

1. Installation de traitement de bouteilles avec dispositif de sécurité comprenant une première zone de protection accessible (1) qui est limitée par une première protection (2) et dans laquelle est prévue une première machine (3) avec au moins un entraînement (4a-4c) associé à la première zone de protection (1) ; et une seconde zone de protection accessible (5) qui est limitée par une seconde protection (6) directement voisine de la première protection (2) et dans laquelle est prévue une seconde machine (7) avec au moins un autre entraînement (8a-8h) associé à la seconde zone de protection (5), étant précisé qu'un transport des bouteilles de la première machine (3) jusqu'à la seconde machine (7) est effectué par l'intermédiaire d'un dispositif de transport (9) qui franchit les zones de protection et qui est pourvu de son propre entraînement (10) par rapport aux entraînements (4a-4c ; 8a-8h), **caractérisée par** un dispositif d'arrêt qui, en cas d'accès à n'importe laquelle des zones de protection (1 ; 5), arrête le ou les entraînements de machine (4a-4c ; 8a-8h) associés aux zones de protection (1, 5) respectives et l'entraînement individuel (10) du dispositif de transport (9) qui franchit la zone de protection, en ce que les première (3) et/ou seconde (7) machines comprennent chacune plusieurs éléments de machine (3a-3c ; 7a-7h) pour chacun desquels est prévu un entraînement propre (4a-4c ; 8a-8h), en ce que les première (2) et/ou seconde (6) protections comportent d'une manière correspondant à chaque élément de machine (3a-3c ; 7a-7h) une entrée (18, 19), et en ce que le dispositif d'arrêt est conçu de telle sorte que l'arrêt d'entraînement effectué se fait grâce à l'ouverture de chaque entrée (18, 19).

2. Installation de traitement de bouteilles selon la revendication 1, **caractérisée en ce que** le dispositif d'arrêt est conçu de telle sorte que lors de l'ouverture de l'entrée (18 ; 19), seul l'entraînement (4a-4c ; 8a-8h ; 10), de l'élément de machine (3a-3c ; 7a-7h) correspondant, qui correspond à l'entrée (18 ; 19) et qui est directement voisin de celle-ci est arrêté par le dispositif d'arrêt.

3. Installation de traitement de bouteilles selon l'une des revendications précédentes, **caractérisée en ce que** le dispositif d'arrêt est conçu pour qu'une alimentation d'entraînement des entraînements (4a-4c ; 8a-8h, 10) des machines (3, 7), des éléments de machine (3a-3c ; 7a-7h) et du dispositif de transport (9) puisse être interrompue.

4. Installation de traitement de bouteilles selon l'une des revendications précédentes, **caractérisée en ce que** les entraînements (4a-4c ; 8a-8h, 10) des machines (3, 7), des éléments de machine (3a-3c ; 7a-7h) et du dispositif de transport (9) sont des entraînements électromagnétiques.

5. Installation de traitement de bouteilles selon l'une des revendications précédentes, **caractérisée en ce qu'**il est prévu au moins une autre zone de protection (11) limitée par une autre protection (12) et directement voisine des première (1) ou seconde (5) zones de protection, étant précisé qu'il est prévu dans cette autre zone de protection (11) une autre machine (13 ; 13a, 13b) et un autre dispositif de transport (14) qui franchit les zones de protection, avec leur entraînement propre (15a ; 15b ; 16), et que l'autre dispositif de transport (14) garantit le transport des bouteilles d'une machine (7 ; 7h) jusqu'à l'autre machine (13 ; 13b).
